# EUROPÄISCHE PATENTSCHRIFT

(11) **EP 4 289 237 B1**
(45) Veröffentlichungstag und Bekanntmachung des Hinweises auf die Patenterteilung: **09.10.2024**
(21) Anmeldenummer: 22000153.1
(22) Anmeldetag: 09.06.2022
(51) Int. Cl.: A01B 23/02, A01B 35/06, A01B 35/12, A01B 61/04

(54) **ACKERSTRIEGEL**
HARROW
SCARIFICATEUR AGRICOLE

(43) Veröffentlichungstag der Anmeldung: 13.12.2023
(73) Patentinhaber: Dick, Bernhard, 4753 Taiskirchen (AT)
(72) Erfinder: Dick, Bernhard, 4753 Taiskirchen (AT)
(74) Vertreter: Jell, Friedrich

(56) Entgegenhaltungen:
- EP-A1- 2 572 563
- EP-A1- 3 808 163
- EP-A2- 0 983 715
- AT-U2- 16 450
- DE-B- 1 203 033
- US-A- 2 850 956

## Beschreibung

Die Erfindung betrifft einen Ackerstriegel, der aus einem Gestell und einer Anzahl an diesem angebrachter Zinken besteht, welche Zinken in Fahrtrichtung rückwärts geneigt und um einen ersten Drehpunkt in einer die Fahrtrichtung enthaltenden Vertikalebene schwenkbar und jeweils von einer Feder in Richtung einer Erhöhung des Bodendruckes beaufschlagt sind, welche Zinken einen Hebel bilden.

Ein Ackerstriegel dient der mechanischen Unkrautbekämpfung, die durch die Einschränkungen beim Einsatz von Herbiziden an Bedeutung gewinnt. Die Zinken bilden mit ihrem bodenseitigen Ende einen Haken, der das Unkraut ausreißt.

Auch bei unebenen Äckern - man denke an einen Kartoffelacker mit Anhäufelung - soll die auf den Boden und damit auf das Unkraut ausgeübte Kraft unabhängig von der Höhe möglichst gleich bleiben, also unabhängig von der Winkelstellung des Zinkens sein.

Die US 2,850,956 beschreibt einen Kultivator, dessen Zinken ohne ansteigende Kraft bei Unebenheiten nach oben ausweichen. Dazu ist eine Druckfeder vorgesehen, die mit einem Ende am Gestell angelenkt ist und mit dem anderen Ende an einem festen Punk an dem Zinken angreift. Die beiden Enden der Druckfeder und der erste Drehpunkt des Zinkens bilden ein Dreieck, das bei Anheben des Zinkens immer schlanker ("spitzwinkeliger") wird. Dadurch wird der gedachte Hebelarm zwischen der Wirkungslinie der Feder und dem ersten Drehpunkt kürzer, was dem Anstieg der Federkraft beim Anheben des Zinkens entgegenwirkt. Ein kompletter Ausgleich dieses Anstieges ist nur in einem sehr kleinen Winkelbereich des Zinkens möglich.

Der Erfindung liegt die Aufgabe zugrunde, eine Feder so auszubilden und einzubinden, dass ein kompletter Ausgleich über den gesamten Arbeitsbereich (=Schwenkbereich) der Zinken erreichbar ist. Nebstbei soll wenn nötig auch die auf den Ackerboden wirksame Vertikalkraft einstellbar sein, und der ganze Ackerstriegel möglichst einfach und unempfindlich gegen Verschmutzung. Schließlich soll der ganze Ackerstriegel für große Arbeitsbreiten zusammenklappbar sein.

Erfindungsgemäß wird das mit den kennzeichnenden Merkmalen des 1. Anspruchs erreicht. Das Federblatt ist ein einfacher und unempfindlicher Bauteil, der als Biegefeder wirkt. Weil der Angriffspunkt des Federblattes auf dem Zinken sich währen dessen Schwenkbewegung verschiebt, ist der Bodendruck über einen weiten Hubbereich konstant. Wenn der Bodendruck in einer Weiterbildung verstellbar ist, trifft das auch über einen weiten Verstellbereich dessen zu. Mit "einigem" Abstand ist gemeint, dass dieser ungefähr in der Größenordnung der Länge des Zinkens ist. Die Länge des Federblattes ist so bemessen, dass es in der tiefsten Arbeitsstellung mit dem Zinken immer noch einen nicht sehr, aber doch spitzen Winkel einschließt und in der höchsten Arbeitsstellung vor dem ersten Drehpunkt des Zinkens endet. Wenn das Federblatt gekrümmt ist, gilt das für den den Zinken berührenden unteren Teil.

Für die Anordnung des Federblattes gibt es zwei Möglichkeiten: Entweder und vorzugsweise ist der Zinken ein einarmiger Hebel und das Federblatt ragt vorwärts-abwärts. Oder der Zinken ist ein zweiarmiger Hebel und das Federblatt ragt aufwärts-rückwärts und wirkt auf den zweiten, nach oben gerichteten, Hebelarm. In diesem Fall ist die Bodenfreiheit größer.

Das Federblatt selbst kann als Biegefeder sowohl in seinem Umriss als auch in seiner Form verschieden gestaltet sein. Vorzugsweise ist es leicht konkav gekrümmt, sodass sein den Zinken berührender unterer Teil mit diesem einen "spitzeren" Winkel einschließt als ein gerades Federblatt würde. Das vergrößert den Bereich des Arbeitshubes, ohne dass Selbsthemmung auftritt.

Vorzugsweise ist das den Zinken berührende Ende des Federblattes mit einem aus einem reibungsarmen Material bestehenden Gleitschuh versehen oder als solcher ausgebildet. Die geringe Reibung bewirkt immer noch eine Dämpfung von auftretenden Schwingungen. Soll der Zinken in eine Transportstellung ganz hochgezogen werden, umgreift der Gleitschuh den Zinken. Dessen Verschiebbarkeit entlang des Zinkens ist dadurch nicht beeinträchtigt.

In einer anderen Ausführungsform besitzt das Ende des Federblattes eine Rolle, die auf dem Zinken abrollt. Das erlaubt eine höhere Geschwindigkeit, weil die Zinken den Bodenerhebungen ungedämpft folgen können.

Ein für die Betriebssicherheit vorteilhaftes Detail besteht in einem Anschlagfinger am Gestell, der die Winkelstellung des Zinkens nach unten begrenzt. Das verhindert, dass der Zinken bei Überfahren einer Grube in sie fällt.

Um die auf den Ackerboden ausgeübte Kraft einstellbar zu machen, ist in Weiterbildung der Erfindung das Widerlager bezüglich des Gestells um einen zweiten Drehpunkt schwenkbar und weist einen nach oben ragenden Betätigungshebel auf, an dem ein Betätigungselement angreift.

Der erfindungsgemäße ganze Ackerstriegel umfasst natürlich eine Vielzahl an Zinken. Diese Zinken sind in mehreren hintereinander angeordneten Reihen angeordnet, wobei die Zinken bezüglich der jeweils davor befindlichen Reihe seitlich versetzt sind. So können bei kleinem Abstand der Spuren der Zinken am Ackerboden die Zinken einer Reihe in größerem seitlichen Abstand voneinander angeordnet sein. Dadurch vereinfachte Montage und Reinigung.

Der Bodendruck einzelner Zinken oder Gruppen von Zinken kann über Betätigungselemente verstellt werden. Soll der Bodendruck aller Zinken gemeinsam verstellbar sein, kann ein gemeinsames Betätigungselement vorgesehen sein, das auf alle Betätigungshebel einwirkt. Ein solches kann mit Vorteil auch dazu dienen, die Zinken in eine Transportstellung zu bringen, in der sie beinahe horizontal sind. Das ist möglich, weil die Federblätter kürzer sind als der Abstand zwischen dem ersten Drehpunkt und der Stelle, an der das erste Ende des Federblattes eingespannt ist.

Im Folgenden wird die Erfindung anhand von Zeichnungen verschiedener Ausführungsformen beschrieben und erläutert. Es stellen dar:
Fig. 1: Eine erste Ausführungsform in der tiefsten Arbeitsstellung,
Fig. 2: Detail A der Fig. 1 in zwei Varianten a) oder b),
Fig. 3: Die erste Ausführungsform in gehobener Arbeitsstellung,
Fig. 4: Eine zweite Ausführungsform in der tiefsten Arbeitsstellung,
Fig. 5: Detail B in Fig. 3, erste Variante,
Fig. 6: Detail B in Fig. 3, in Transportstellung,
Fig. 7: Den ganzen Ackerstriegel in Draufsicht,
Fig. 8: Den ganzen Ackerstriegel im Vertikalschnitt.

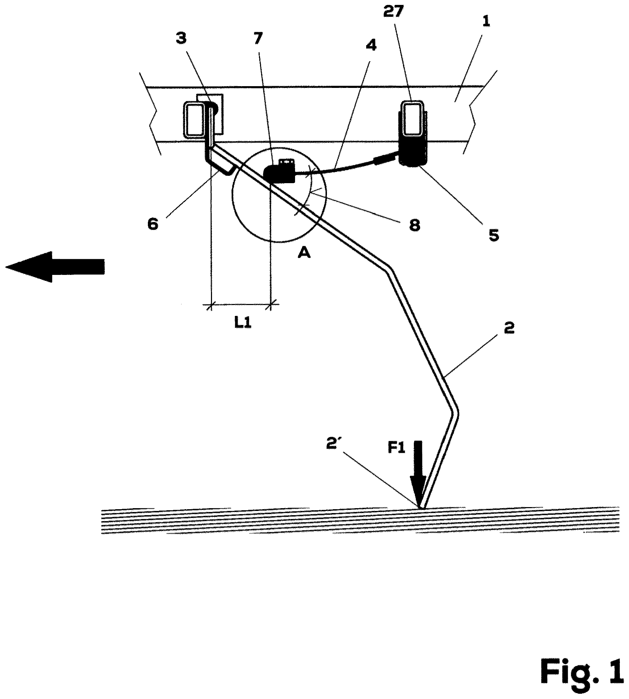

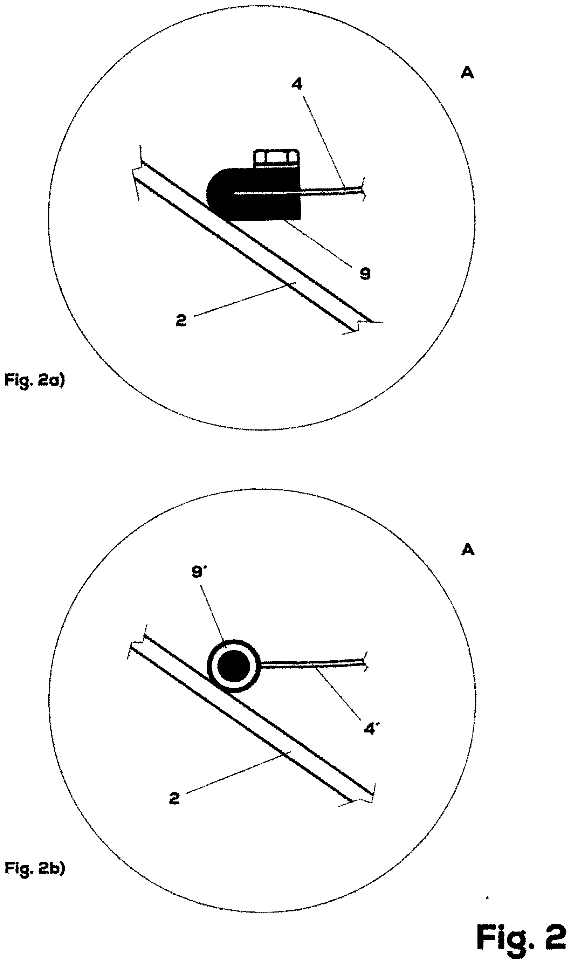

In **Fig. 1** ist das Gestell nur durch einen horizontalen Balken 1 und die Fahrtrichtung durch einen großen Pfeil angedeutet. Ein Zinken 2, hier ein einarmiger Hebel, ist in einem ersten als Lager ausgebildeten ersten Drehpunkt 3 schwenkbar, um Bodenerhebungen folgen zu können. Dabei soll die auf den Ackerboden ausgeübte Kraft F1 im Wesentlichen unverändert bleiben. Ein am Gestell 1 befestigter Anschlag 6 begrenzt die tiefste Arbeitsstellung des Zinkens 2. Ein Federblatt 4 ist in einem am Gestell 1 angebrachten Widerlager 5 mit einem Ende eingespannt. Dessen anderes Ende 7 wirkt in einem Abstand L1 vom ersten Drehpunkt auf den Zinken 2. Es schließt mit dem Zinken 4 einen Winkel 8 ein. Dieser Winkel 8 ist ein (nicht sehr) spitzer Winkel, sodass dieses andere Ende 7 bei Verschwenken des Zinken 2 auf diesem ohne Selbsthemmung zum ersten Drehpunkt 3 hin gleiten kann. Dazu ist dieses andere Ende 7 mit einem Gleitschuh 9 aus einem reibungsarmen Werkstoff (siehe Detail A in Fig. 2 a) oder alternativ mit einer Rolle 9' (siehe Fig. 2 b) ausgestattet. Das Federblatt 4 ist hier konkav gekrümmt, wodurch der Winkel 8 etwas reduziert ist. **Fig. 2** zeigt diese zwei möglichen Varianten des Federblattes 4.

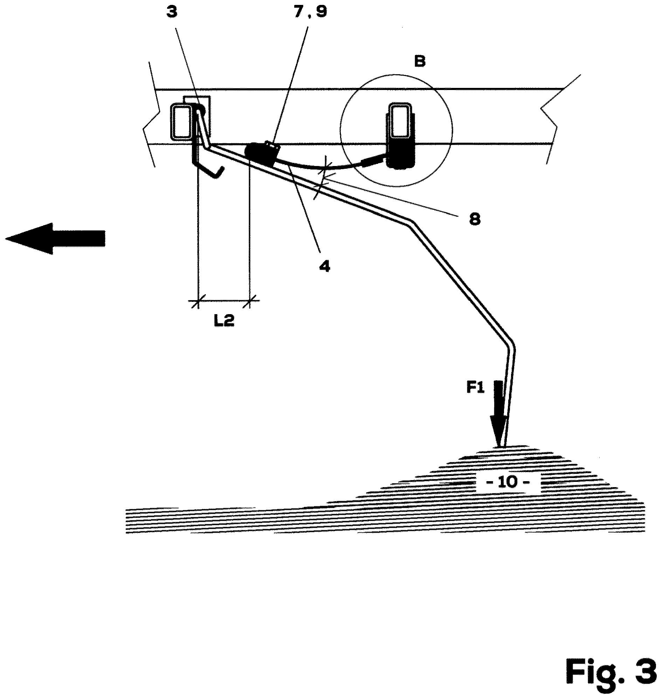

**Fig. 3** zeigt dasselbe wie Fig. 1, aber aus der tiefsten Arbeitsstellung der Fig. 1 in eine der Anhäufelung 10 folgende höhere Arbeitsstellung angehoben. Beim Anheben gleitet das andere Ende 7 des Federblattes 4 zum ersten Drehpunkt 3 hin, von dem es nun nur mehr einen Abstand L 2 hat und der Winkel 8 ein spitzerer Winkel ist. Das den Ackerboden berührende untere Ende des Zinkens 2' kann sehr verschieden gestaltet sein, in der dargestellten einfachsten Form bildet es einen Haken.

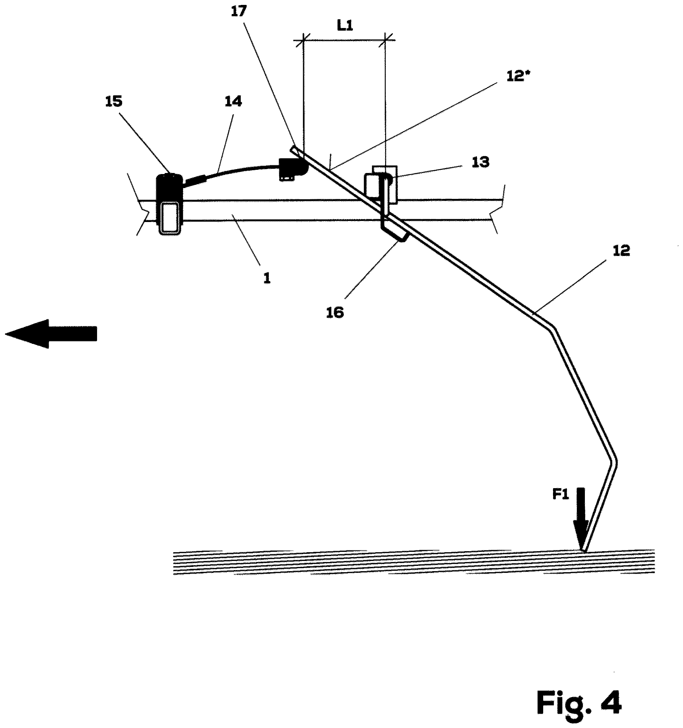

In der Variante der **Fig. 4** ist der Zinken ein zweiarmiger Hebel. Dessen unterer Arm bildet den eigentlichen Zinken 12, dessen oberer Arm 12* wirkt mit dem Federblatt 14 zusammen. Dieses ist hier über dem Gestell 1 angeordnet und vom Widerlager 15 rückwärts-aufwärts gerichtet. Dessen nicht eingespanntes Ende 17 berührt den zweiten Arm 12* des Zinkens 14 in einem Abstand L1 vom ersten Drehpunkt 13.

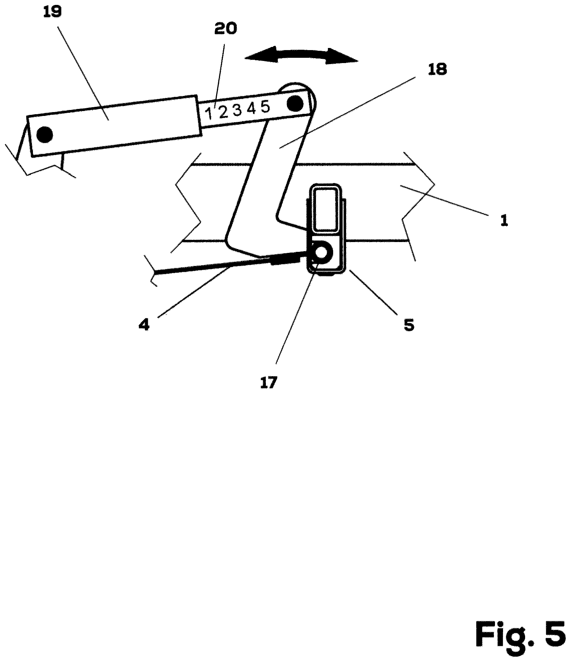

**Fig. 5** zeigt das Widerlager 5 in der Variante mit verstellbarer Bodenkraft F1, die dann im Betrieb aber wieder konstant ist. Das Widerlager 5 mit dem fest eingespannten Federblatt 4 ist hier nicht fest mit dem Gestell 1 verbunden, sondern um einen zweiten Drehpunkt 17 am Gestell 1 schwenkbar und hat hier einen aufwärts gerichteten Hebel 18, an dem ein Betätigungselement 19, beispielsweise ein Hydraulikzylinder, angreift. Die angedeutete Skala 20 entspricht verschiedenen Werten der Bodenkraft F1.

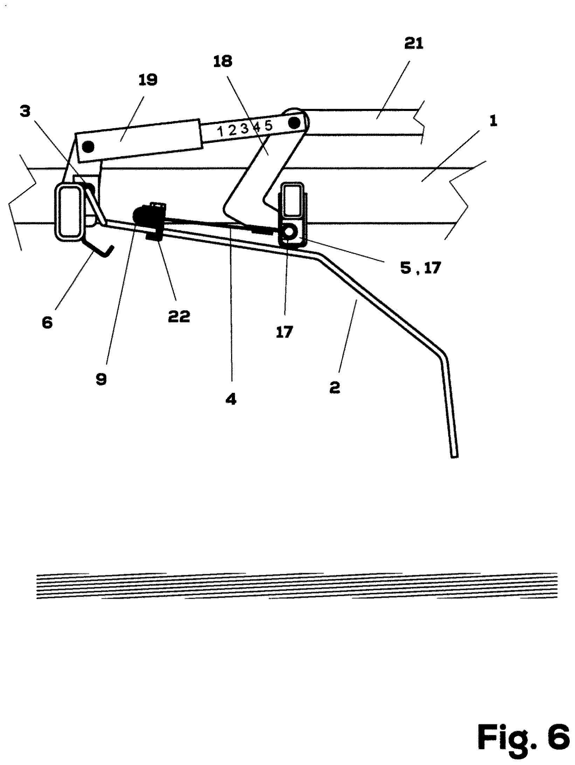

In der Variante der **Fig. 6** sind die Zinken zusätzlich zum einstellbaren Bodendruck noch in eine Transportstellung bringbar, in der sie in eine höchste ungefähr horizontale Stellung angehoben sind. Zu diesem Zweck wird dasselbe Betätigungselement 19 in seine Endstellung gebracht. Weiters muss dazu der Gleitschuh 9 am Ende des Federblattes den Zinken umgreifen, was durch den Haken 22 am Gleitschuh 9 angedeutet ist, um den Zinken ganz hochzuziehen. In der Transportstellung ist weiters für den Straßentransport ein Ackerstriegel mit besonders großer Arbeitsbreite um längs gerichtete Scharnierachsen aufwärts faltbar.

Die tatsächlich ausgeführte Anordnung des Zinken nach Fig. 1 hat folgende Abmessungen:

| | |
|---|---|
| Länge des Zinken 2 vom Drehpunkt 3 bis zur Spitze 2': | 580 mm |
| Abstand zwischen erstem (3) und zweitem Drehpunkt (17): | 260 mm |
| Länge des Federblattes 4: | 180 mm |
| Höhe des ersten Drehpunktes 3 über unebenem Boden: | 510 mm bis 420 mm |
| Winkel 8 (siehe Fig. 1) des Federblattes 4 bei Höhe 510 mm: | 36 ° |
| Winkel 8 des Federblattes 4 bei Höhe 420 mm: | 3 ° |
| Abstand L1 bei Höhe 510 mm: | 85 mm |
| Abstand L2 bei Höhe 420 mm: | 60 mm |

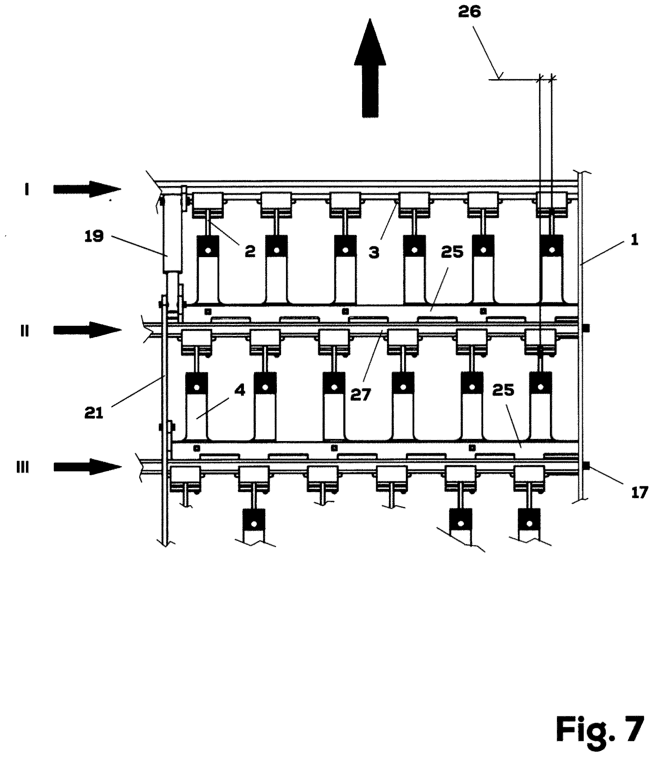

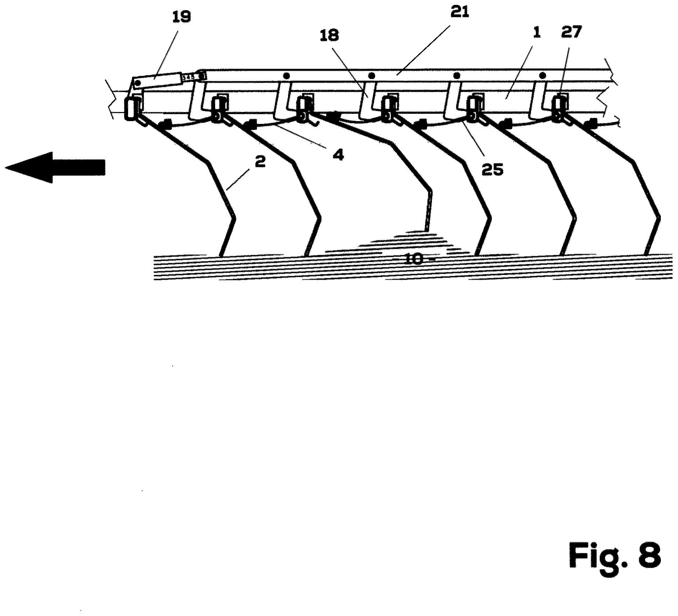

**Fig. 7** und **Fig. 8** ist zu sehen, dass der Ackerstriegel mehre Reihen I, II, III in Fahrtrichtung hintereinander mit jeweils einer Anzahl Zinken 2 umfasst. Das Gestell 1 ist ein rechteckiger Rahmen mit Querträgern 27, die einzelnen Widerlager 5 der Figuren 1 bis 4 mit ihren Hebeln 18 sind zu einem schwenkbaren Querbalken 25 zusammengefasst, der über Schubstangen 21 (Fig. 6, 7) mit dem Betätigungselement 19 verbunden. Die Zinken 2 einer Reihe (II) sind bezüglich der Zinken der Reihe (I) davor um einen Abstand 26 versetzt, sodass der Abstand zwischen den Spuren der Zinken 2 am Ackerboden nur der Versatz 26 ist.

In Fig. 6,8 ist die Bodenkraft aller Zinken 2 durch ein einziges Betätigungselement 19 über die Schubstangen 21 und die Querbalken 25 verstellbar. Wenn sämtliche Zinken oder Gruppen von Zinken mit einem eigenen derartigen Betätigungselement 19 ausgestattet sind, sind sie einzeln oder in Gruppen verstellbar.

## Patentansprüche

1. Ackerstriegel bestehend aus einem Gestell (1) und einer Anzahl an diesem angebrachter Zinken (2; 12), welche in Fahrtrichtung rückwärts geneigt sind und um einen ersten Drehpunkt (3; 13) in einer die Fahrtrichtung enthaltenden Vertikalebene schwenkbar und jeweils von einer Feder (4; 14) in Richtung einer Erhöhung des Bodendruckes (F1) beaufschlagt sind, welche Zinken (2) einen Hebel bilden, **dadurch gekennzeichnet, dass** die Feder (4; 14) ein auf Biegung beanspruchtes Federblatt ist, das mit einem ersten Ende in einem am Gestell befestigten Widerlager (5; 15) eingespannt ist und mit dem anderen, zweiten, Ende (7; 17) in einem Punkt auf den Zinken (2; 12) wirkt, der von der Winkelstellung des Zinkens (2; 12) abhängt, wobei das Federblatt (4; 14) kürzer ist als der Abstand zwischen dem ersten Drehpunkt (3; 13) und dem Widerlager (5, 15).

2. Ackerstriegel nach Anspruch 1, **dadurch gekennzeichnet, dass** der Zinken (12) ein zweiarmiger Hebel ist, dessen erster Arm (12) der eigentliche Zinken ist und auf dessen, vom Drehpunkt (13) nach oben ragendem zweiten Arm (12*) die Feder (14) wirkt.

3. Ackerstriegel nach Anspruch 1, **dadurch gekennzeichnet, dass** der Zinken (2) ein einarmiger Hebel ist, auf den die Feder (4) wirkt.

4. Ackerstriegel nach Anspruch 1, **dadurch gekennzeichnet, dass** das nicht eingespannte andere Ende (7;17) der Feder (4;14) als aus einem reibungsarmen Material bestehender Gleitschuh (9;19) ausgebildet ist oder mit einem solchen ausgestattet ist.

5. Ackerstriegel nach Anspruch 4, **dadurch gekennzeichnet, dass** am Gleitschuh (9;19) ein den Zinken (2;12) umgreifender Haken (22) angeordnet ist.

6. Ackerstriegel nach Anspruch 1, **dadurch gekennzeichnet, dass** das zweite Ende (7;17) der Feder (4;14) eine Rolle (19) besitzt, die auf dem Zinken (2;12) abrollt.

7. Ackerstriegel nach Anspruch 1, **dadurch gekennzeichnet, dass** die Feder (4; 14) bezüglich des Gestells (1) konkav (4) beziehungsweise konvex (14) gekrümmt ist.

8. Ackerstriegel nach Anspruch 1, **dadurch gekennzeichnet, dass** am Gestell (1) ein Anschlagfinger (6; 16) vorgesehen ist, der die Winkelstellung des Zinken (2; 12) nach unten begrenzt.

9. Ackerstriegel nach Anspruch 1, **dadurch gekennzeichnet, dass** das Widerlager (5) bezüglich des Gestells (1) um einen zweiten Drehpunkt (17)schwenkbar ist und einen nach oben ragenden Betätigungshebel (18) aufweist, an dem ein Betätigungselement (19) angreift.

10. Ackerstriegel nach Anspruch 1, **dadurch gekennzeichnet, dass** die Zinken (2) in mehreren hintereinander angeordneten Reihen (I, II, III) angeordnet sind, wobei die Zinken (2) bezüglich der jeweils davor befindlichen Reihe einen QuerVersatz (26) aufweisen.

11. Ackerstriegel nach Anspruch 9, **dadurch gekennzeichnet, dass** ein gemeinsames Betätigungselement (19) auf alle Betätigungshebel (18) einwirkt.

12. Ackerstriegel nach Anspruch 9, **dadurch gekennzeichnet, dass** einzelne Betätigungselemente (19) einzelnen Zinken (2; 12) oder Gruppen von Zinken (2; 12) zugeordnet sind.

13. Ackerstriegel nach Anspruch 5, **dadurch gekennzeichnet, dass** die Zinken (2; 12) durch Schwenken des Betätigungselementes (19) in seine Endstellung mittels der Haken (22) in eine angenähert horizontale Transportstellung bringbar sind.

## Claims

1. Tined weeder consisting of a frame (1) and a number of tines (2; 12) attached thereto, which are inclined backwards in the direction of travel and can pivot about a first pivot point (3; 13) in a vertical plane containing the direction of travel and are each acted upon by a spring (4; 14) in the direction of an increase in the ground pressure (F1), which tines (2) form a lever, **characterized in that** the spring (4; 14) is a spring leaf subjected to bending stress, which is clamped with a first end in an abutment (5; 15) fastened to the frame and acts with the other, second, end (7; 17) on the tine (2; 12) at a point which depends on the angular position of the tine (2; 12), wherein the spring leaf (4; 14) is shorter than the distance between the first pivot point (3; 13) and the abutment (5, 15).

2. Tined weeder according to claim 1, **characterized in that** the tine (12) is a two-armed lever, the first arm (12) of which is the actual tine and on the second arm (12*) of which, projecting upwards from the pivot point (13), the spring (14) acts.

3. Tined weeder according to claim 1, **characterized in that** the tine (2) is a single-arm lever on which the spring (4) acts.

4. Tined weeder according to claim 1, **characterized in that** the non-tensioned other end (7; 17) of the spring (4; 14) is designed as a sliding shoe (9; 19) consisting of a low-friction material or is equipped with such a shoe.

5. Tined weeder according to claim 4, **characterized in that** a hook (22) engaging around the tine (2; 12) is arranged on the sliding shoe (9; 19).

6. Tined weeder according to claim 1, **characterized in that** the second end (7; 17) of the spring (4; 14) has a roller (19) which rolls on the tine (2; 12).

7. Tined weeder according to claim 1, **characterized in that** the spring (4; 14) is curved concavely (4) or convexly (14) with respect to the frame (1).

8. Tined weeder according to claim 1, **characterized in that** a stop finger (6; 16) is provided on the frame (1), which limits the downward angular position of the tine (2; 12).

9. Tined weeder according to claim 1, **characterized in that** the abutment (5) is pivotable with respect to the frame (1) about a second pivot point (17) and has an upwardly projecting actuating lever (18) on which an actuating element (19) engages.

10. Tined weeder according to claim 1, **characterized in that** the tines (2) are arranged in a plurality of rows (I, II, III) arranged one behind the other, wherein the tines (2) have a transverse offset (26) with respect to the row located in front of them in each case.

11. Tined weeder according to claim 9, **characterized in that** a common actuating element (19) acts on all actuating levers (18).

12. Tined weeder according to claim 9, **characterized in that** individual actuating elements (19) are assigned to individual tines (2; 12) or groups of tines (2; 12).

13. Tined weeder according to claim 5, **characterized in that** the tines (2; 12) can be brought into an approximately horizontal transport position by pivoting the actuating element (19) into its end position by means of the hooks (22).

## Revendications

1. Herse-étrille composée d'un châssis (1) et d'un certain nombre de dents (2 ; 12) montées sur celui-ci, qui sont inclinées vers l'arrière dans le sens de la marche et peuvent pivoter autour d'un premier point de pivot (3 ; 13) dans un plan vertical incluant le sens de la marche et sont contraintes chacune par un ressort (4 ; 14) en direction d'une augmentation de la pression au sol (F1), lesquelles dents (2) forment un levier, **caractérisée en ce que** le ressort (4 ; 14) est une lame de ressort contrainte en flexion qui est serrée à une première extrémité dans un contre-appui (5 ; 15) fixé sur le châssis et agit à la deuxième extrémité (7 ; 17) sur les dents (2 ; 12) en un point qui dépend de la position angulaire de la dent (2 ; 12), la lame de ressort (4 ; 14) étant plus courte que la distance entre le premier point de pivot (3 ; 13) et le contre-appui (5, 15).

2. Herse-étrille selon la revendication 1, **caractérisée en ce que** la dent (12) est un levier à deux bras, dont le premier bras (12) est la dent proprement dite et dont le deuxième bras (12*) dépassant vers l'extérieur du point de pivot (13) est soumis à l'action du ressort (14).

3. Herse-étrille selon la revendication 1, **caractérisée en ce que** la dent (2) est un levier à un bras sur lequel agit le ressort (4).

4. Herse-étrille selon la revendication 1, **caractérisée en ce que** l'autre extrémité (7 ; 17) non serrée du ressort (4 ; 14) est conformée comme un patin de glissement (9 ; 19) fait d'un matériau à faible frottement ou équipée de celui-ci.

5. Herse-étrille selon la revendication 4, **caractérisée en ce qu'**un crochet (22) entourant la dent (2 ; 12) est disposé sur le patin de glissement (9 ; 19).

6. Herse-étrille selon la revendication 1, **caractérisée en ce que** la deuxième extrémité (7 ; 17) du ressort (4 ; 14) possède un rouleau (19) qui roule sur la dent (2 ; 12).

7. Herse-étrille selon la revendication 1, **caractérisée en ce que** le ressort (4 ; 14) est incurvé selon une forme concave (4) ou convexe (14) par rapport au châssis (1).

8. Herse-étrille selon la revendication 1, **caractérisée en ce qu'**est prévu sur le châssis (1) une patte de butée (6 ; 16) qui limite la position angulaire de la dent (2 ; 12) vers le bas.

9. Herse-étrille selon la revendication 1, **caractérisée en ce que** le contre-appui (5) peut pivoter par rapport au châssis (1) autour d'un deuxième point de pivot (17) et présente un levier d'actionnement (18) qui dépasse vers le haut, sur lequel un élément d'actionnement (19) se met en prise.

10. Herse-étrille selon la revendication 1, **caractérisée en ce que** les dents (2) sont disposées en plusieurs rangées (I, II, III) disposées les unes derrière les autres, dans lesquelles les dents (2) présentent un décalage transversal (26) par rapport à la rangée qui précède.

11. Herse-étrille selon la revendication 9, **caractérisée en ce qu'**un élément d'actionnement (19) commun agit sur tous les leviers d'actionnement (18).

12. Herse-étrille selon la revendication 9, **caractérisée en ce que** certains éléments d'actionnement (19) sont associés à certaines dents (2 ; 12) ou à certains groupes de dents (2 ; 12).

13. Herse-étrille selon la revendication 5, **caractérisée en ce que** les dents (2 ; 12) peuvent être amenées dans une position de transport approximativement horizontale par le basculement de l'élément d'actionnement (19) dans sa position finale au moyen des crochets (22).
